# EUROPEAN PATENT APPLICATION

(11) **EP 1 684 270 A2**
(43) Date of publication of application: **26.07.2006**
(21) Application number: 06000626.9
(22) Date of filing: 12.01.2006
(51) Int. Cl.: G11B 7/005

(54) **Optical recording and reproducing method and optical recording and reproducing system**

(30) Priority: 13.01.2005 JP 2005006767
(71) Applicant: TDK Corporation, Chuo-ku, Tokyo 103-8272 (JP)
(72) Inventor: Fukuzawa, Narutoshi, Tokyo, 103-8272 (JP); Kikukawa, Takashi, Tokyo, 103-8272 (JP); Kobayashi, Tatsuhiro, Tokyo, 103-8272 (JP); Aoi, Toshiki, Tokyo, 103-8272 (JP)
(74) Representative: Wagner, Karl H.

(57) **Abstract**

The present invention removes the effect of a high-frequency noise component of a high power signal obtained by irradiating a laser beam with high read power, which can recognize a recording mark less than a diffraction limit, in a super resolution optical recording and reproducing system. The same recording region of an optical recording medium 12 is irradiated according to an irradiation spot Sb by a laser beam with read power and an irradiation spot Sa by a laser beam with high read power to obtain a ordinary power signal and a high power signal. The ordinary power signal and the high power signal are normalized to an average level by high pass filters 21B and 23B and low pass filters 21C and 23C of a high power signal processing circuit 20 and a ordinary power signal processing circuit 22. Then, a subtracter 26 subtracts the ordinary power signal from the high power signal to obtain a substrated signal. The differential signal and a ordinary reproduced signal that has passed through a parallel processing circuit 24 are amplitude-modulated by a pre-equalizer 28 and a parallel pre-equalizer 25D and then added up by an adder 30 to form a composite signal. The composite signal is output as a reproduced signal.

## Description

The present invention relates to an optical recording and reproducing method and an optical recording and reproducing system capable of forming and reading a recording mark smaller than a diffraction limit of a recording and reproducing optical system.

Recently, there has been proposed a super resolution optical recording and reproducing system capable of forming and reading a recording mark smaller than a diffraction limit of a recording/reproducing optical system, as disclosed in Japanese Patent Laid-Open Publication No. 2003-6872.

The super resolution optical recording and reproducing system can record and read a recording mark (super resolution recording mark) exceeding a diffraction limit of an optical system. However, the principle of recording and reading the recording mark does not become clear yet.

In the super resolution optical recording and reproducing system, the super resolution recording mark cannot be recognized with a read laser beam having power (ordinary read power) used in a conventional optical recording and reproducing system but it can be recognized with a read laser beam with increased read power (high read power).

Accordingly, the super resolution optical recording and reproducing system remarkably increases noise when there is a mark smaller than a diffraction limit and cannot improve the quality of reproduced signals because the power of the read laser beam is increased.

An optical recording medium of a conventional optical recording and reproducing system can be considered as a kind of low pass filter having the frequency of a resolution limit as a cut-off frequency when viewed from the side of a reproducing optical system and reproducing circuit. Accordingly, noise components lower than the cut-off frequency in a reproduced signal are also linearly increased when the power of the read laser beam is increased.

That is, when the power of the read laser beam (read power) is increased and thus a carrier component caused by a super resolution recording mark is generated, noise components lower than the cut-off frequency are linearly increased according to the read power. Noise components higher than the cut-off frequency are not largely varied with the read power (at least not linearly varied). Thus, CNR corresponding to a difference between a carrier level and a noise level adjacent to a carrier frequency is large but SNR corresponding to the ratio of the carrier level to the entire noise level is not large.

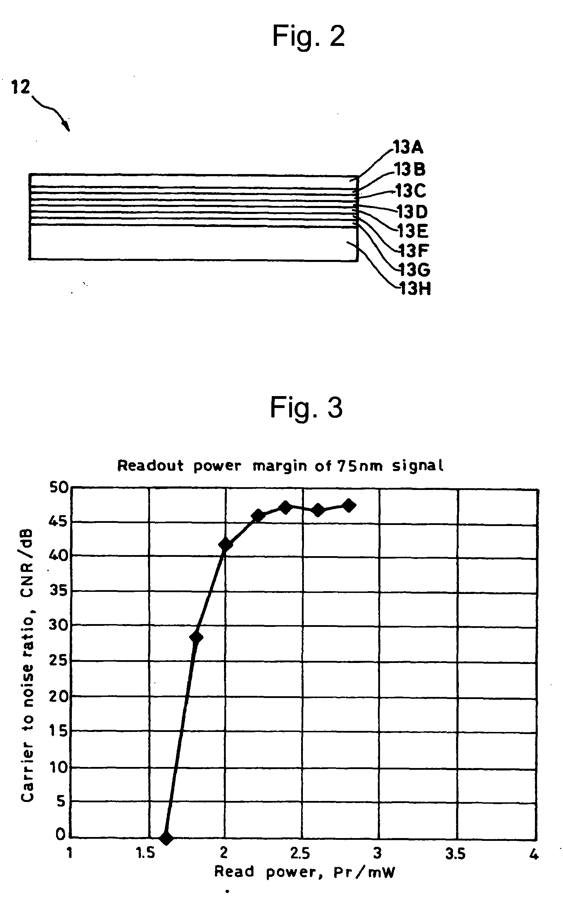

For example, an RF signal obtained by reading a single pattern of a recording mark/space line with a length of 75nm using high read power under the condition that the wavelength of a read laser beam is 405nm, NA of a reproducing optical system is 0.85 and a read constant linear velocity (CLV) is 4.9m/s is shown in FIG. 3. Here, the length 75nm is less than a diffraction limit of the reproducing optical system.

It can be seen from FIG. 3 that a very large variation is repeated for the signal amplitude. Thus, it is difficult to reproduce a correct signal. The conventional optical recording and reproducing system can control or remove the aforementioned large variation (noise) by limiting the band of a reproduced signal or equalizing the waveform of the reproduced signal. When high read power is used for super resolution, however, the influence of high-frequency noise is become large and the noise is close to a signal band so that the noise component cannot be easily removed with the conventional method.

Accordingly, the present invention has been made in view of the above problems occurring in the prior art, and it is an object of the present invention to provide an optical recording and reproducing method and an optical recording and reproducing system capable of removing large noise from a reproduced signal even when the power of a read laser beam is increased.

To achieve the above object, the present invention provides
(1) an optical recording and reproducing method for recognizing a recording mark formed on an optical recording medium, the size of the recording mark being smaller than a resolution limit of a reproduction optical system, using a read laser beam having read power higher than ordinary read power required for recognizing a recording mark which size is larger than the resolution limit, wherein a laser beam with read power and a laser beam with high read power are respectively irradiated to the same recording region of the optical recording medium to obtain a ordinary power signal and a high power signal.
(2) The ordinary power signal obtained by irradiating the laser beam with ordinary read power is differential from the high power signal obtained by irradiating the laser beam with high read power to obtain a differential signal.
(3) The ordinary power signal is amplified to the average level of the high power signal to be normalized and differential from the high power signal to obtain the differential signal.
(4) The high power signal is attenuated to the average level of the ordinary power signal to be normalized and differential from the ordinary power signal to obtain a differential signal.
(5) The differential signal is obtained after the ordinary power signal and the high power signal are band-limited.
(6) The ordinary power signal is added to the differential signal to form a composite signal and the composite signal is output as a reproduced signal.
(7) The waveforms of the differential signal and the ordinary power signal thereto are equalized and then the differential signal and the ordinary power signal are added up.
(8) A laser beam is split into the laser beam with ordinary read power and the laser beam with high read power, and the laser beam with ordinary read power and the laser beam with high read power are irradiated to the same track of the optical recording medium to obtain the ordinary power signal and the high power signal.
(9) The laser beam with ordinary read power and the laser beam with high read power, which are emitted from different light sources, are irradiated to the same track of the optical recording medium to obtain the ordinary power signal and the high power signal.
(10) A optical recording and reproducing system which includes a read power laser optical system irradiating a laser beam with ordinary read power, required for recognizing a recording mark which size is larger than a resolution limit of a reproduction optical system, to an optical recording medium on which the size of a recording mark smaller than the resolution limit and a high read power laser optical system irradiating a laser beam with read power higher than the ordinary read power to the optical recording medium, and recognizes the recording mark which size is smaller than the resolution limit using the read laser beam with the high read power, comprising: a reproduction optical system constructed such that the laser beam with read power and the laser beam with high read power are respectively irradiated to the same recording region of the optical recording medium, and a circuit system for processing a ordinary power signal and a high power signal obtained by respectively irradiating the laser beam with read power and the laser beam with high read power.
(11) The optical recording and reproducing system further comprises a high power signal processing circuit for processing the high power signal, a ordinary power signal processing circuit for processing the ordinary power signal, and a subtracter for subtracting the output signal of the ordinary power signal processing circuit from the output signal of the high power signal processing circuit to obtain a differential signal.
(12) The ordinary power signal processing circuit amplifies the ordinary power signal to the average level of the high power signal to normalize the ordinary power signal.
(13) The high power signal processing circuit attenuates the high power signal to the average level of the ordinary power signal to normalize the high power signal.
(14) The ordinary power signal processing circuit and the high power signal processing circuit respectively limit the bands of the ordinary power signal and the high power signal and output the band-limited signals to the subtracter.
(15) The optical recording and reproducing system further comprises a pre-equalizer and a parallel pre-equalizer for equalizing the waveform of the differential signal, a parallel processing circuit for equalizing the waveform of the ordinary power signal, and an equalizer for adding up the waveform-equalized differential signal and the ordinary power signal to form a composite signal and outputting the composite signal as a reproduced signal.
(16) The read power laser optical system and the high read power laser optical system are constructed such that a laser beam is split into the laser beam with ordinary read power and the laser beam with high read power by a splitting optical system and guided to the optical recording medium.
(17) The read power laser optical system and the high read power laser optical system respectively include a ordinary power laser source outputting the laser beam with ordinary read power and a high power laser source outputting the laser beam with high read power.

The present invention can reduce and remove noise components generated when a recording mark less than a diffraction limit is read using a laser beam with high read power by processing, such as amplifying, attenuating and filtering, a high read power signal and a ordinary read power signal. Furthermore, when a recording mark less than the diffraction limit and a recording mark exceeding the diffraction limit coexist, a differential signal and a filtered or waveform-equalized ordinary power signal are added up to obtain signal components exceeding and less than the diffraction limit, from which only noise is removed although a signal component is removed from a mark exceeding the diffraction limit together with the noise according to the differential signal.
FIG. 1 is a block diagram of an optical recording and reproducing system according to an embodiment of the present invention;
FIG. 2 is an enlarged cross-sectional view of an optical recording medium reproducing recorded contents by a recording and reproducing method according to an embodiment of the present invention;
FIG. 3 illustrates an RF signal obtained from the optical recording medium by the same method;
FIG. 4 illustrates RF signals obtained from the optical recording medium by irradiating a laser beam having ordinary read power and a laser beam having high read power in the same optical recording and reproducing system;
FIG. 5 illustrates an RF signal obtained by normalizing a high power signal obtained using high read power to an average level in the same optical recording and reproducing system;
FIG. 6 illustrates an RF signal obtained by amplifying a ordinary power signal obtained using ordinary read power and normalizing the amplified ordinary power signal to an average level;
FIG. 7 illustrates a differential signal of the RF signals shown in FIGS. 3 and 4; and
FIG. 8 illustrates high power signals, ordinary power signals and differential signals of the high power signals and ordinary power signal when they are not filtered and when they are filtered.

The best optical recording and reproducing method includes a step of respectively irradiating a laser beam with ordinary read power and a laser beam with high read power to the same recording region of an optical recording medium to obtain a ordinary power signal and a high power signal, a step of subtracting the ordinary power signal from the high power signal, and a step of adding up the differential signal and the ordinary power signal to form a composite signal and outputting the composite signal as a reproduced signal.

### (First Embodiment)

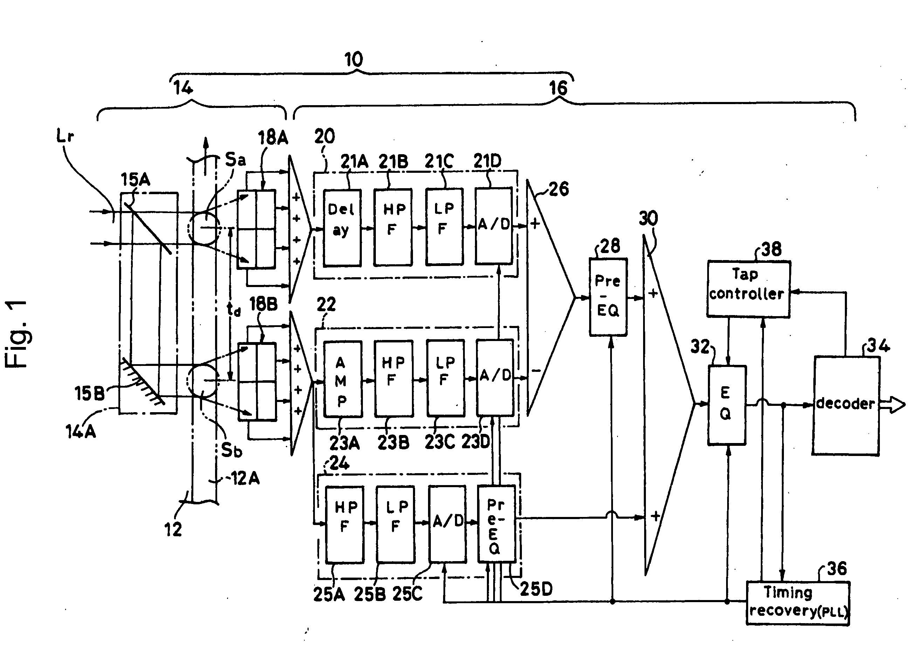

An optical recording and reproducing system 10 according to a first embodiment of the present invention is explained with reference to FIG. 1.

The optical recording and reproducing system 10 includes a reproducing optical system 14 for irradiating a read laser beam Lr to an optical recording medium 12 to generate an electric signal from the light reflected from the optical recording medium 12, and a circuit system 16 for processing the electric signal obtained by the reproducing optical system 14.

The reproducing optical system 14 includes a splitting optical unit 14A for splitting the read laser beam Lr emitted from a read laser source (not shown) installed in an optical head (not shown) into two laser beams and is constructed such that it can irradiate the split two laser beams to a portion in the track moving direction of the same track 12A on the optical recording medium 12.

The splitting optical unit 14A includes a semitransparent mirror 15A and a mirror 15B that total-reflects light reflected from the semitransparent mirror 15A. The semitransparent mirror 15A transmits and reflects light in the ratio of transmitted light to reflected light, 3:1 to 4:1.

The reproducing optical system 14 includes photo-detectors 18A and 18B that receive lights obtained when the two read laser beams output from the splitting optical unit 14A are reflected from the optical recording medium 12 and photoelectric-convert the received lights.

Here, the distance between spots Sa and Sb on the track 12A to which the two laser beams split by the splitting optical unit 14A are irradiated is set such that it is equal to the product of the moving velocity of the track 12A when the track 12A is read by time td shown in FIG. 1. It is preferable that the irradiated spots Sa and Sb on the track 12A are distant from each other such that the distance between the spots Sa and Sb is not affected by stray light from the spots and, simultaneously, they approximate to each other as close as possible to use the same focus servo device (not shown).

A high power signal that is the output signal of the photo-detector 18A is output to a high power signal processing circuit 20 included in the circuit system 16, and a ordinary power signal that is the output signal of the photo-detector 18A is output to a ordinary power processing circuit 22 and a parallel processing circuit 24 of the circuit system 16.

The high power signal processing circuit 20 includes a delay circuit 21A, a high pass filter 21B, a lower pass filter 21C and an A/D converter 21D, which are sequentially arranged. The delay circuit 12A is closest to the photo-detector 18A.

The delay circuit 21A corrects a time difference between the two irradiated spots Sa and Sb when the optical recording medium 12 is read and delays the high power signal output from the photo-detector 18A by the time td.

The high pass filter 21B and the low pass filter 21C AC-couple signals input thereto and prevent aliasing in subsequent A/D conversion.

The ordinary power signal processing circuit 22 includes an amplifier 23A, a high pass filter 23B, a low pass filter 23C and an A/D converter 23D, which are sequentially arranged. The amplifier 23A is closest to the photo-detector 18B.

The parallel processing circuit 24 includes a high pass filter 25A, a low pass filter 25B, an A/D converter 25C and a parallel pre-equalizer 25D, which are sequentially arranged. The high pass filter 25A is closest to the photo-detector 18B. The low pass filters 23C and 25B of the ordinary power signal processing circuit 22 and the parallel processing circuit 24 have the same function as that of the low pass filter 21C. Furthermore, it is preferable that the low pass filers 23C and 25B have a band, which is limited to remove spike noise such as laser noise easily generated in case of ordinary power read or random noise inevitably existing in the optical recording medium 12, different from that of the low pass filter 21C.

The amplifier 23A of the ordinary power signal processing circuit 22 amplifies the ordinary power signal output from the photo-detector 18B to the same level as the high power signal output from the photo-detector 18A.

The circuit system 16 includes a subtracter 26 that subtracts the output signal of the A/D converter 23D from the output signal of the A/D converter 21D. The output signal of the subtracter 26 is input to a pre-equalizer 28 which equalizes the waveform of the signal.

The parallel pre-equalizer 25D and the pre-equalizer 28 previously equalize the signals input thereto before an adder 30. The output signals of the pre-equalizer 28 and the parallel pre-equalizer 25D are added up by the adder 30 and the waveforms thereof are finally equalized by an equalizer 32 and reproduced by a decoder 34.

In FIG. 1, reference numeral 36 denotes a timing recovery circuit and 38 denotes a tap controller.

The timing recovery circuit 36 recovers errors of operating timing of the A/D converters 21D and 23D, parallel pre-equalizer 25D, pre-equalizer 28, equalizer 32 and tap controller 38 based on the signal output from the equalizer 32 to the decoder 34. While the laser beams with high read power and ordinary read power are obtained by splitting the read laser beam Lr using the splitting optical unit 14A and irradiated by two laser optical systems (read power laser optical system and high read power laser optical system) in the first embodiment, the present invention is not limited thereto. For example, the read laser beam Lr can be split using a diffraction grating. Furthermore, it is possible to vary the power of a laser beam to obtain a read power laser beam and a high read power laser beam and respectively irradiate the read power laser beam and high read power laser beam to the same portion of the optical recording medium to obtain a ordinary power signal and a high power signal.

Moreover, it is possible to generate a laser beam with read power and a laser beam with high read power using different laser sources and irradiate the two laser beams to the same track of the optical recording medium to obtain the ordinary power signal and high power signal.

Furthermore, an additional equalizer can be placed before the subtracter to correct a difference between shapes of two spots that may be generated caused by a read power difference between the two spots or a light intensity distribution difference between the two spots.

### <Second Embodiment>

A method that irradiates the laser beam with read power and laser beam with high read power respectively output from the read power laser optical system and high read power laser optical system to the optical recording medium 12 on which a recording mark smaller than a resolution limit to read recorded contents will now be explained.

As shown in FIG. 2, the recording medium 12 includes a UV resin film 13A having a thickness of 0.1mm, a dielectric layer 13B formed of ZnS and SiO2, a platinum oxide recording layer 13C, a dielectric layer 13D formed of ZnS and SiO2, a light-absorbing layer 13E formed of Sb and Te, a dielectric layer 13F formed of ZnS and SiO2, a reflecting layer 13G formed of silver alloy, and a substrate 13H formed of polycarbonate. The UV resin film 13A is placed at a light-receiving side.

A read condition in the second embodiment is that the wavelength of a read laser beam is 405nm, NA of a reproducing optical system is 0.85 and a read constant linear velocity is 4.9m/s. A diffraction limit under this condition is 20.7MHz corresponding to the length of the recording mark, 119nm. A single pattern of recording mark/space line having a length of 75nm was previously recorded on the optical recording medium 12. This corresponds to 33MHz.

FIG. 3 shows the relationship between CNR and read power when the single pattern of 75nm recording mark/space line is read. Referring to FIG. 3, super resolution read does not occur with a ordinary read power of 0.8mW and thus a carrier component of 33MHz is not generated. When the single pattern is read with high read power of 2/6mW, however, the 33MHz carrier component is generated in a high power signal and a high CNR of 47dB is obtained.

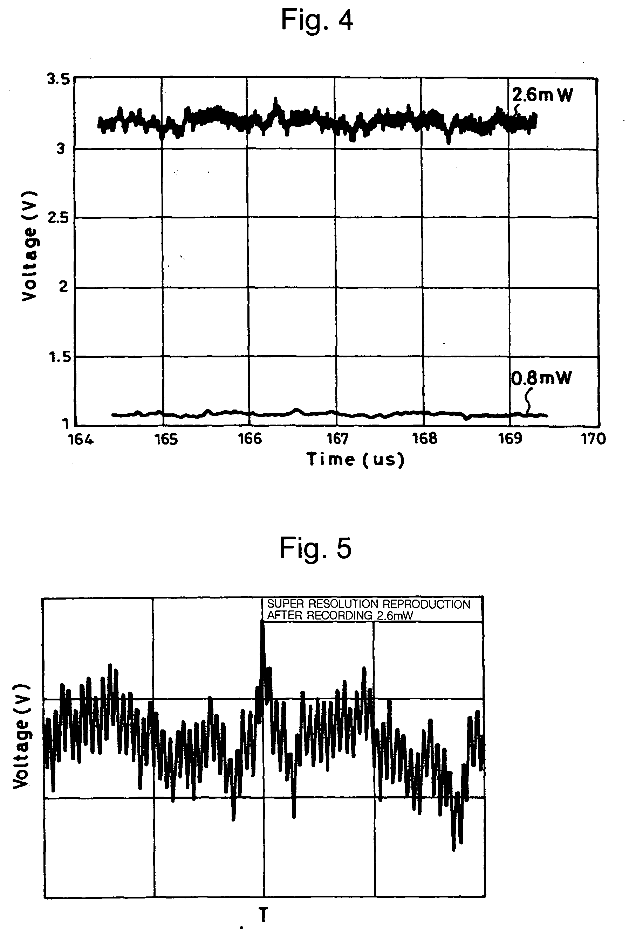

However, referring to FIG. 4, a DC component of an RF signal obtained from the optical recording medium 12 increases as the power of the read laser beam increases to high read power, and the average level of the RF signal is increased about 3.3 times. Furthermore, the original noise component is also increased about 3.3 times to vary in a range wider than the signal amplitude.

FIG. 5 shows the result obtained by reading a previously recorded single pattern of 75nm recording mark/space line with read power of 2.6mW corresponding to high read power, obtaining an average signal level, performing AC coupling, A/D-converting the AC-coupled signal using a digital oscilloscope having sufficient resolution and recording the resultant data. The signal shown in FIG. 5 includes carrier components less than a diffraction limit and noise components exceeding the diffraction limit.

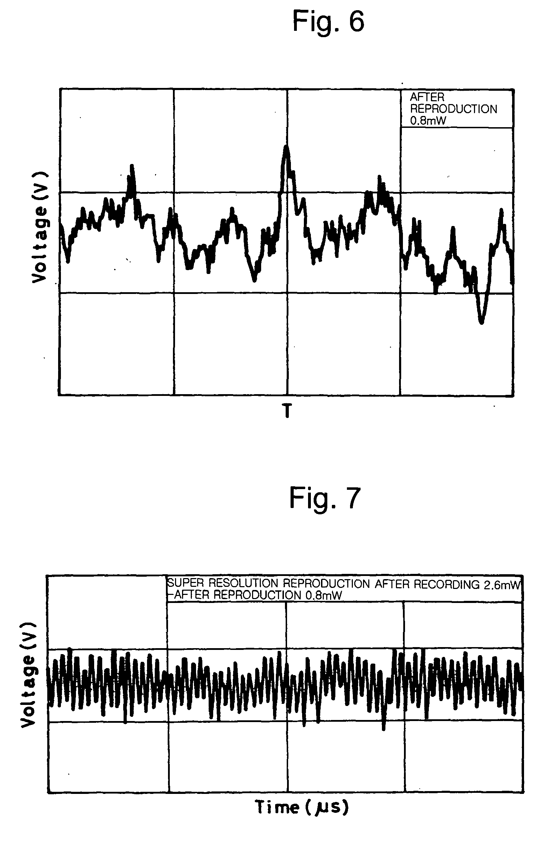

FIG. 6 shows the result obtained by reading the same track as that read to obtain the result shown in FIG. 5 with read power of 0.8mW corresponding to ordinary read power, amplifying the read signal to the average level of the previously obtained high read power, performing AC coupling on the amplified signal, A/D-converting the AC-coupled signal using a digital oscilloscope having sufficient resolution, filtering the A/D-converted signal using a lower pass filter (smoothing) and recording the resultant data. The signal shown in FIG. 6 does not include carrier components less than a diffraction limit and includes only noise components exceeding the diffraction limit.

The reproduced signal obtained with the high read power (referring to FIG. 5) and the reproduced signal obtained with the ordinary read power (referring to FIG. 6) are synchronized with each other and one of the reproduced signals is differential from another to obtain the signal shown in FIG. 7. It can be seen from FIG. 7 that only the carrier components are left and the noise components are removed.

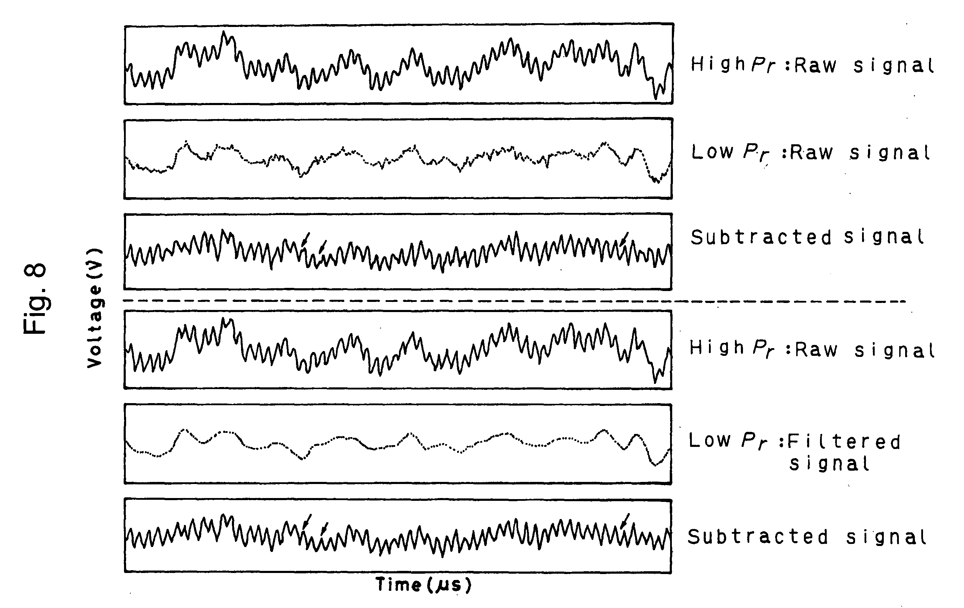

This noise component removal effect can be seen from FIG. 8. In FIG. 8, upper three signals respectively correspond to the high read power signal, ordinary power signal and differential signal of the high read power signal and ordinary power signal when filtering is not performed. Lower three signals respectively correspond to the high power signal, filtered ordinary power signal and differential signal of the high power signal and filtered signal.

It can be seen from FIG. 8 that noise components are satisfactorily removed at portions of the differential signals, indicated by arrows.

Furthermore, the filtered signal shown at the lower part of FIG. 8 is a signal read with the ordinary read power and it is equivalent to the signal that has passed through a low pass filter. In this case, the high power signal may not pass through the low pass filter and 10 data points may be averaged to obtain the result equivalent to the result obtained by passing the signal through the low pass filter.

When carrier components exceeding a diffraction limit and carrier components less than the diffraction limit coexist, the carrier components exceeding the diffraction limit are controlled together with noise components. Thus, it is required to appropriately process the reproduced signal having less noise, obtained with the ordinary read power, and then combine the reproduced signal and the differential signal.

According to the optical recording and reproducing method and optical recording and reproducing system of the present invention, large noise can be removed from a reproduced signal even when the power of a read laser beam is increased in the event of super resolution reproduction.

## Claims

1. An optical recording and reproducing method for recognizing a recording mark formed on an optical recording medium, the size of the recording mark being smaller than a resolution limit of a reproduction optical system, using a read laser beam having read power higher than ordinary read power required for recognizing a recording mark which size is larger than the resolution limit,
wherein a laser beam with read power and a laser beam with high read power are respectively irradiated to the same recording region of the optical recording medium to obtain a ordinary power signal and a high power signal.

2. The optical recording and reproducing method as claimed in claim 1, wherein the ordinary power signal obtained by irradiating the laser beam with ordinary read power is differential from the high power signal obtained by irradiating the laser beam with high read power to obtain a differential signal.

3. The optical recording and reproducing method as claimed in claim 2, wherein the ordinary power signal is amplified to the average level of the high power signal to be normalized and differential from the high power signal to obtain the differential signal.

4. The optical recording and reproducing method as claimed in claim 2, wherein the high power signal is attenuated to the average level of the ordinary power signal to be normalized and differential from the ordinary power signal to obtain the differential signal.

5. The optical recording and reproducing method as claimed in any one of claims 2, 3 and 4, wherein the differential signal is obtained after the ordinary power signal and the high power signal are band-limited.

6. The optical recording and reproducing method as claimed in any one of claim2 2, 3, 4 and 5, wherein the ordinary power signal is added to the differential signal to form a composite signal and the composite signal is output as a reproduced signal.

7. The optical recording and reproducing method as claimed in claim 6, wherein waveforms of the differential signal and the ordinary power signal thereto are equalized and then the differential signal and the ordinary power signal are added up.

8. The optical recording and reproducing method as claimed in any one of claims 1 to 6, wherein a laser beam is split into the laser beam with ordinary read power and the laser beam with high read power, and the laser beam with ordinary read power and the laser beam with high read power are irradiated to the same track of the optical recording medium to obtain the ordinary power signal and the high power signal.

9. The optical recording and reproducing method as claimed in any one of claims 1 to 7, wherein the laser beam with ordinary read power and the laser beam with high read power, which are emitted from different light sources, are irradiated to the same track of the optical recording medium to obtain the ordinary power signal and the high power signal.

10. A optical recording and reproducing system which includes a read power laser optical system irradiating a laser beam with ordinary read power, required for recognizing a recording mark which size is larger than a resolution limit of a reproduction optical system, to an optical recording medium on which the size of a recording mark smaller than the resolution limit and a high read power laser optical system irradiating a laser beam with read power higher than the ordinary read power to the optical recording medium, and recognizes the recording mark which size is smaller than the resolution limit using the read laser beam with the high read power, comprising:
a reproduction optical system constructed such that the laser beam with read power and the laser beam with high read power are respectively irradiated to the same recording region of
the optical recording medium, and a circuit system for processing a ordinary power signal and a high power signal obtained by respectively irradiating the laser beam with read power and the laser beam with high read power.

11. The optical recording and reproducing system as claimed in claim 10, further comprising a high power signal processing circuit for processing the high power signal, a ordinary power signal processing circuit for processing the ordinary power signal, and a subtracter for subtracting the output signal of the ordinary power signal processing circuit from the output signal of the high power signal processing circuit to obtain a differential signal.

12. The optical recording and reproducing system as claimed in claim 11, wherein the ordinary power signal processing circuit amplifies the ordinary power signal to the average level of the high power signal to normalize the ordinary power signal.

13. The optical recording and reproducing system as claimed in claim 11, wherein the high power signal processing circuit attenuates the high power signal to the average level of the ordinary power signal to normalize the high power signal.

14. The optical recording and reproducing system as claimed in any one of claims 10 to 13, wherein the ordinary power signal processing circuit and the high power signal processing circuit respectively limit the bands of the ordinary power signal and the high power signal and output the band-limited signals to the subtracter.

15. The optical recording and reproducing system as claimed in any one of claims 10 to 14, further comprising a pre-equalizer and a parallel pre-equalizer for equalizing the waveform of the differential signal, a parallel processing circuit for equalizing the waveform of the ordinary power signal, and an equalizer for adding up the waveform-equalized differential signal and the ordinary power signal to form a composite signal and outputting the composite signal as a reproduced signal.

16. The optical recording and reproducing system as claimed in any one of claims 10 to 15, wherein the read power laser optical system and the high read power laser optical system are constructed such that a laser beam is split into the laser beam with ordinary read power and the laser beam with high read power by a splitting optical system and guided to the optical recording medium.

17. The optical recording and reproducing system as claimed in any one of claims 10 to 16, wherein the read power laser optical system and the high read power laser optical system respectively include a ordinary power laser source outputting the laser beam with ordinary read power and a high power laser source outputting the laser beam with high read power.
